# EUROPEAN PATENT SPECIFICATION

(11) **EP 1 141 599 B1**
(45) Date of publication and mention of the grant of the patent: **12.05.2004**
(21) Application number: 00982670.2
(22) Date of filing: 16.10.2000
(51) Int. Cl.: F16K 5/04

(54) **AN APPARATUS AND METHOD FOR VERIFYING THE MATERIAL PROPERTIES OF A PLUG VALVE SEALING ELEMENT**
VERFAHREN UND VORRICHTUNG ZUR ÜBERPRÜFUNG DER MATERIALEIGENSCHAFTEN EINES KÜKENHAHNDICHTUNGSELEMENTES
DISPOSITIF ET PROCEDE SERVANT A VERIFIER LES PROPRIETES MATERIELLES D'UN ELEMENT D'ETANCHEITE DE CLAPET D'OBTURATION

(30) Priority: 18.10.1999 US 419309
(43) Date of publication of application: 10.10.2001
(73) Proprietor: General Valve Inc., Brookshire, TX 77423 (US)
(72) Inventor: SMITH, Gordon, M., Brookshire, TX 77423 (US)
(74) Representative: Henderson, Wendy Agnes
(86) International application number: PCT/US2000/041206
(87) International publication number: WO 2001/029459

(56) References cited:
- GB-A- 2 040 408
- US-A- 3 011 513
- US-A- 3 674 235
- US-A- 3 765 646
- US-A- 5 833 214

## Description

### FIELD OF THE INVENTION

The present invention relates generally to the field of plug valves used to control the flow of fluids, and more specifically to an apparatus for verifying the material properties of a sealing element used in non-lubricated, double block and bleed plug valves.

### BACKGROUND ART

Double block and bleed plug valves are well known in the art as exemplified by U.S. Patent No. 3,011,513 issued to Heinen in 1961. Their positive sealing and superior flow characteristics are highly advantageous for controlling the flow of fluids. Plug-type valves are generally the type in which a valve body is provide with a pair of axially aligned ports which are connected to incoming and outgoing fluid lines for movement of the fluid under pressure therethrough. Typically, a plug is adapted to selectively rotate within the main chamber of the valve to either provide a continuous channel between the incoming and outgoing coaxial ports when the valve is in the open position or a fluid-tight seal in one or both of the coaxial interconnecting ports when the valve is in the closed position.

Often such plug-type valves are implemented with slips and seals in a seat and reseat configuration. The slips and seals provide means for blocking the flow through the valve at both the inlet and outlet ports when the valve is in the closed position. This permits maintenance personnel to bleed the valve body with the valve in its closed position with a minimum expenditure of time and labor costs. Typically, the plug slips are interconnected so that in opening the valve from its fully closed position, (beginning with the valve in the seated/closed position) the first motion of the plug is upward vertical in one direction which has the effect of retracting the slips from the inside surface of the valve body in order to prevent scoring of the valve seals in the subsequent motion when the valve is turned to place the flow passage to be in line with the inlet and outlet. In conventional plug-type valves which employ slips and seals as described above, after the flow passage has been partially aligned with the inlet and outlet, vertical motion of the plug is then again required in a direction opposite to that of the initial vertical motion (downward) which retracted the slips. This second oppositely directed vertical motion in effect reseats the valve by placing the flow passage in the plug in intimate contact with the inlet and outlet, respectively and finishing alignment.

Heat, time, temperature and energy, pressure and elastomer formulation directly affect the material properties of the seals of valves. Also cleanliness, surface preparation and profile affect the bond of the seal to the substrate. Further, chemical age, moisture content and sand blast affect the quality of the bond strength of valve seals to valve slips.

Seal quality needs to be verified in some manner. Various test coupons are used for chemical and physical verification of steel. Much like such steel properties verification, there is a need to develop seal properties verification techniques.

Using a test coupon or sample in a separate specimen would work to some degree, but one cannot be sure that it was processed equally with the production batch. This is the present state of the art, namely, manufacture another slip and then pull test that slip's seal.

### SUMMARY OF THE INVENTION

The present invention relates to a unique way to test a plug valve seal by embedding a test coupon into the face of the slip. By doing so, all variables are controlled. Even the heat energy is averaged by placing the test coupon at the mid-section of the slip.

During the cleaning of the face of the slip (i.e., de-greasing, baking, sand blasting and dust removal) all variables are controlled. During the bond adhesive application all applicable surfaces have the same adhesive applied during the same time frame in the same environment (except under test coupon tab which shall be prevented from adhering mechanically or chemically). The elastomer prepared for the seal groove is identical and is prepared in the same batch as that for the test coupon and all installed with the same tackifying agent by the same individual. The pressure and an upper platen heat, travel through the thick and thin ends of the slip to the groove side of the seal causing the bonding and curing process to proceed. The test coupon placed at the mid-section sees the representative average heat energy. Meanwhile, the lower platen transfers its heat energy via a pre-heated mold to the seal material causing equal curing across the entire seal and test coupon boss.

The seal cross-section is the same as the test section of the seal test coupon. The flash is removed simultaneously. The post cure is next completed equally on seal and test coupon. After cool down occurs, the test coupon test tab (which was prevented from adhering mechanically or chemically earlier) is released and placed into a pull tab fixture and a varying known load is applied. The elongation is monitored and a stress/strain curve can be generated, verifying material properties. Further pulled to failure, the seal groove adhesion is verified. The removed test tab can then be compression set tested and a variety of other tests can be performed. Material and performance certifications can be generated for each slip seal.

By using the unique embedded test coupon of the present invention, quality assurance is enhanced, down time in the field is reduced, there is a visually perceptible indication of quality assurance, each and every plug valve slip can be verified and all of these advantages are realized with only little additional cost or labor.

### OBJECTS OF THE INVENTION

It is therefore a principal object of the present invention to provide a new method for more accurately testing the material properties of a seal such as a seal used in plug-type valves.

It is another object of the invention to provide a unique plug valve seal apparatus having a built-in test coupon which is manufactured concurrently with the entire seal and made releasibly integral to the seal for testing the integrity of the seal material.

It is still another object of the invention to provide a method and apparatus for enhancing the quality of plug valve seals by providing an integral test coupon which is available for material testing without affecting the sealing function of the remainder of the seal so that one may more accurately assess material properties without destroying the seal.

### BRIEF DESCRIPTION OF THE DRAWINGS

The aforementioned objects and advantages of the present invention, as well as additional objects and advantages thereof, will be more fully understood hereinafter as a result of a detailed description of a preferred embodiment when taken in conjunction with the following drawings in which:

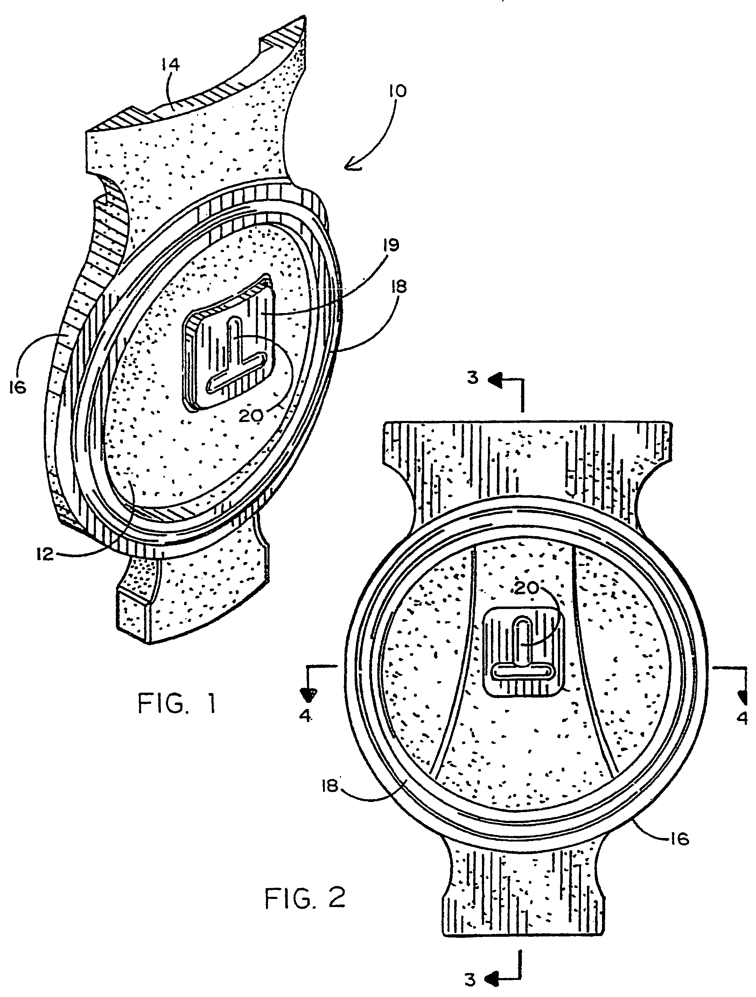

FIG. 1 is a three-dimensional view of a plug valve slip having an integral test coupon for assessing seal integrity thereof;
FIG. 2 is a plan view of the slip of FIG. 1;
FIG. 3 is a cross-sectional view taken along lines 3-3 of FIG. 2;
FIG. 4 is a cross-sectional view taken along lines 4-4 of FIG. 2;
FIG. 5 is a cross-sectional, enlarge partial view of the area "(See FIG. 5)" encircled in FIG. 3; and
FIG. 6 is a cross-sectional, enlarged partial view of the area "(See FIG. 6)" encircled in FIG. 3.

### DETAILED DESCRIPTION OF A PREFERRED EMBODIMENT

Referring to the accompanying figures, it will be seen that a valve slip 10, in accordance with a preferred embodiment of the present invention, comprises a slip body 16 having a sealing face 12 and a plug interface 14. Sealing face 12 comprises a seal 18 of generally circular shape which extends around the entire face 12 near its perimeter. Plug interface 14 has a dove tail cross-section which mates with a complimentary interface on the plug (not shown) permitting vertical translation of the slip relative to the plug in the manner described above in regard to the prior art.

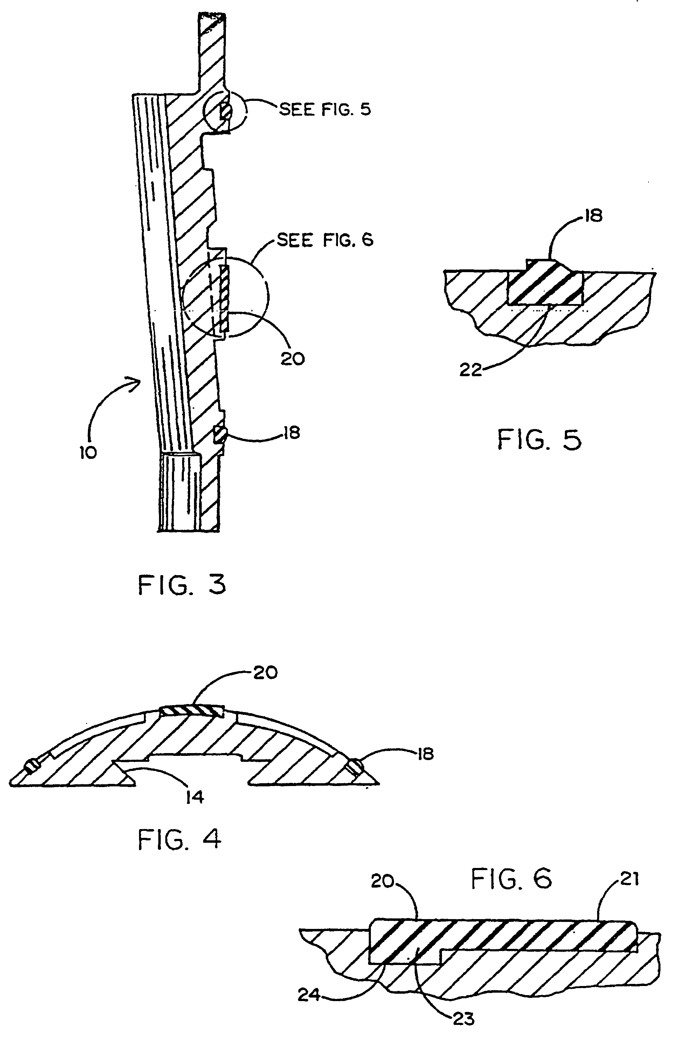

The inventive feature of the invention is in the illustrated embodiment, implemented in the form of a test coupon 20 which is preferably located on a central platform 19 on sealing face 12. As shown in FIGs. 5 and 6, test coupon 20 has a base portion 23 adhesively positioned in a recess 24. Recess 24 is substantially identical in cross-sectional dimensions to the recess 22 in which seal 18 is adhesively secured. As indicated above, the test coupon 20 and seal 18 are preferably made from the same batch of material at the same time and adhesively secured in their respective recesses 22 and 24 using the same adhesive and curing time and temperature. The remainder of test coupon 20, namely, tab 21, is not secured by adhesive so that it may be easily gripped for test purposes to exert a pulling force on the base portion 23. In this manner, the seal 18 is effectively tested in the most accurate way.

Having thus described a preferred embodiment of the invention, it being understood that numerous other forms of the invention, including applications other than plug valve seal testing, are contemplated, what is claimed is:

## Claims

1. A slip for a plug valve of the type having a plug with an aperture selectively alignable with upstream and downstream pipes for permitting fluid flow through the valve, the plug having at least one slip selectively alignable with either the upstream or the downstream pipes for permitting or blocking fluid flow through the vatve, said slip having a seal (18) for preventing fluid leakage when the slip is so aligned, **characterized in that** the slip further comprises a test coupon (20) at least a portion of which is formed of the same material as said seal (18).

2. A slip according to claim 1, wherein the seal (18) is provided within a first recess (22) in the slip and a second recess (24) in said slip receives said test coupon portion (20) for testing the material properties thereof.

3. A slip according to claim 1, wherein said test coupon portion (20) is made concurrently with said seal using the same batch of material.

4. A slip according to claim 2, wherein each of said seal (18) and said test coupon portion (20) is secured by an adhesive within respective ones of said first and second recesses.

5. A slip according to claim 4, wherein said adhesive in each said recess is identical.

6. A slip according to claim 5, wherein said adhesive in each said recess originates from the same batch of material.

7. A slip according to claim 6, wherein said adhesive in each said recess is applied concurrently to both said recesses and is cured simultaneously for identical periods of time and at substantially identical temperatures.

8. A plug valve incorporating a slip according to any one of claims 1-7.

9. A method of testing the material properties of a seal used on an apparatus to prevent fluid leakage around the apparatus, the method comprising the steps of:
a) embedding a test sample of said seal into the apparatus using substantially identical recess dimensions and adhesive;
b) selecting said test sample from the same batch of material as said seal;
c) selecting said test sample adhesive from the same batch of material as said seal adhesive;
d) curing each of said test sample adhesive and said seal adhesive concurrently over the same period of time and at substantially the same temperature; and
e) subjecting the test sample to mechanical properties testing as measurement of the mechanical properties of said seal.

## Patentansprüche

1. Ein Streifen für ein Stopfenventil, das einen Stopfen mit einer Öffnung hat, die wahlweise auf Rohre, die zur Fluidquelle hinführen und auf Rohre, die von der Quelle wegführen, ausrichtbar ist, um das Strömen des Fluids durch das Ventil zu gestatten, wobei der Stopfen mindestens einen Streifen hat, der wahlweise entweder auf das Rohr, das zur Fluidquelle hinführt, oder auf das Rohr, das von der Quelle wegführt, ausrichtbar ist, um das Strömen des Fluids durch das Ventil zu gestatten bzw. zu blockieren, wobei der Streifen eine Dichtung (18) hat, die den Verlust von Fluid durch Auslecken verhindert, wenn der Streifen auf die erwähnte Art und Weise ausgerichtet ist,
**dadurch gekennzeichnet, dass** der Streifen weiterhin einen Testcoupon (20) aufweist, der zumindest teilweise aus dem gleichen Werkstoff wir die Dichtung (18) besteht.

2. Ein Streifen nach Anspruch 1, **dadurch gekennzeichnet, dass** sich die Dichtung (18) innerhalb einer ersten Vertiefung (22) im Streifen befindet und eine zweite Vertiefung (24) im Streifen den Testcouponabschnitt (20) zur Prüfung der Werkstoffeigenschaften der Dichtung aufnimmt.

3. Ein Streifen nach Anspruch 1, **dadurch gekennzeichnet, dass** der Testcouponabschnitt (20) gleichzeitig mit der Dichtung und unter Verwendung derselben Werkstoffcharge hergestellt wird.

4. Ein Streifen nach Anspruch 2, **dadurch gekennzeichnet, dass** sowohl die Dichtung (18) als auch der Testcouponabschnitt (20) mit Hilfe eines Klebstoffs in der ersten bzw. zweiten Vertiefung befestigt sind.

5. Ein Streifen nach Anspruch 4, **dadurch gekennzeichnet, dass** sich in jeder Vertiefung genau der gleiche Klebstoff befindet.

6. Ein Streifen nach Anspruch 5, **dadurch gekennzeichnet, dass** der in jeder Vertiefung vorhandene Klebstoff aus derselben Werkstoffcharge stammt.

7. Ein Streifen nach Anspruch 6, **dadurch gekennzeichnet, dass** der in jeder Vertiefung vorhandene Klebstoff in beide Vertiefungen gleichzeitig eingebracht und gleichzeitig ausgehärtet wird, wobei die jeweiligen Aushärtungszeiten identisch und die jeweiligen Aushärtungstemperaturen im Wesentlichen identisch sind.

8. Ein Stopfenventil, in das ein Streifen nach einem der Ansprüche 1 bis 7 integriert ist.

9. Ein Verfahren zur Prüfung der Werkstoffeigenschaften einer Dichtung, die an einer Vorrichtung verwendet wird, um den Verlust von Fluid durch Auslecken um die Vorrichtung herum zu verhindern, wobei das Verfahren die folgenden Schritte umfasst:
a) Einbetten eines Probestücks der Dichtung in die Vorrichtung unter Verwendung von im Wesentlichen identischen Vertiefungsabmessungen und von im Wesentlichen identischem Klebstoff;
b) Auswählen des Probestücks aus derselben Werkstoffcharge, aus der auch die Dichtung stammt;
c) Auswählen des Probestückklebstoffs aus derselben Werkstoffcharge, aus der auch der Dichtungsklebstoff stammt;
d) gleichzeitiges Aushärten des Probestückklebstoffs und des Dichtungsklebstoffs, wobei die jeweiligen Aushärtungszeiten identisch und die jeweiligen Aushärtungstemperaturen im Wesentlichen identisch sind; und
e) Prüfen der Festigkeitseigenschaften des Probestücks, um die Festigkeitseigenschaften der Dichtung zu messen.

## Revendications

1. Glissement pour un robinet à tournant du type présentant une soupape avec une ouverture alignable de manière sélective avec des tuyaux amont et aval peux permettre l'écoulement de liquide à travers le robinet, la soupape présentant au moins un glissement alignable de manière sélective avec l'un ou l'autre des tuyaux amont ou aval pour permettre de bloquer l'écoulement de liquide à travers le robinet, ledit glissement présentant un dispositif d'étanchéité (18) pour empêcher la fuite de liquide quand le glissement est ainsi aligné, **caractérisé en ce que** le glissement comprend en outre une éprouvette (20), dont au moins une partie est composée du même matériau que ledit dispositif d'étanchéité (18).

2. Glissement selon la revendication 1, dans lequel le dispositif d'étanchéité (18) est proposé dans un premier encastrement (22) dans le glissement et un second encastrement (24) dans ledit glissement reçoit ladite partie d'éprouvette (20) peur tester les propriétés matérielles de celui-ci.

3. Glissement selon la revendication 1, dans lequel ladite partie d'éprouvette (20) est fabriquée simultanément audit dispositif d'étanchéité à l'aide du même lot de matériau.

4. Glissement selon la revendication 2, dans lequel chacune desdites parties du dispositif d'étanchéité (18) et de l'éprouvette (20) est fixée par un adhésif à l'intérieur des parties respectives desdits premier et second encastrements.

5. Glissement selon la revendication 4, dans lequel ledit adhésif dans chacun desdits encastrements est identique.

6. Glissement selon la revendication 5, dans lequel ledit adhésif dans chacun desdits encastrements provient du même lot de matériau.

7. Glissement selon la revendication 6, dans lequel ledit adhésif dans chacun desdits encastrements est appliqué simultanément aux dits deux encastrements et est traité de manière simultanée pendant des périodes de temps identiques et à des températures sensiblement identiques.

8. Robinet à tournant comprenant un glissement selon l'une quelconque des revendications 1 à 7.

9. Procédé pour tester les propriétés matérielles d'un dispositif d'étanchéité utilisé sur un appareil pour empêcher la fuite de liquide autour de l'appareil, le procédé consistant à :
a) encastrer un échantillon pour analyse dudit dispositif d'étanchéité dans l'appareil utilisant des dimensions d'encastrements et un adhésif sensiblement identiques ;
b) sélectionner ledit échantillon à partir du même lot de matériau que ledit dispositif d'étanchéité ;
c) sélectionner ledit adhésif d'échantillon à partir du même lot de matériau que ledit adhésif du dispositif d'étanchéité ;
d) traiter chacun desdits adhésif de l'échantillon et du dispositif d'étanchéité simultanément pendant la même période de temps et sensiblement à la même température ; et
e) soumettre l'échantillon au contrôle des propriétés mécaniques comme mesure des propriétés mécaniques dudit dispositif d'étanchéité.
